# EUROPEAN PATENT SPECIFICATION

(11) **EP 1 249 374 B1**
(45) Date of publication and mention of the grant of the patent: **18.11.2009**
(21) Application number: 02006526.4
(22) Date of filing: 19.03.2002
(51) Int. Cl.: B60R 21/237

(54) **Airbag apparatus**
Airbageinrichtung
Agencement de sac de sécurité gonflable

(30) Priority: 09.04.2001 JP 2001110200
(43) Date of publication of application: 16.10.2002
(73) Proprietor: TAKATA CORPORATION, Minato-ku, Tokyo 106-8510 (JP)
(72) Inventor: Okamoto, Hideaki, c/o Takata Corporation, Minato-ku, Tokyo 106-8510 (JP); Kumagai, Masayoshi, c/o Takata Corporation, Minato-ku, Tokyo 106-8510 (JP)
(74) Representative: Banzer, Hans-Jörg

(56) References cited:
- WO-A-02/43993
- DE-A1- 19 926 425
- US-A- 5 140 799
- US-A- 5 538 281
- US-A- 5 957 486

## Description

### [Industrial Field of the Invention]

The present invention relates to an airbag apparatus which is suitably used as a passenger- or driver-side airbag apparatus installed in front of an occupant in a vehicle such as an automobile.

### [Related Art]

A passenger-side airbag apparatus comprises a container arranged in an instrument panel in front of a front passenger seat, a gas generator for inflating an airbag, the airbag which is folded and accommodated in the container, and a lid covering the container. As a vehicle comes in collision, the gas generator is actuated to supply gas into the airbag, whereby the airbag starts to inflate. As the airbag starts to inflate, the lid is pushed by the airbag to open so that the airbag inflates toward the vehicle cabin.

The airbag is provided with a gas inlet for receiving gas from the gas generator. The peripheral edge of the gas inlet is connected to the container.

As described in Japanese Patent Unexamined Publication H04-100754, the airbag is folded by a step of first reverse folding both left and right sides of the airbag toward the center, the airbag in this state being called as an interim folded body having a reduced lateral width, and a step of folding the interim folded body into a bellow, the airbag in this state being called as a lump body. Then, the lump body is accommodated in the container.

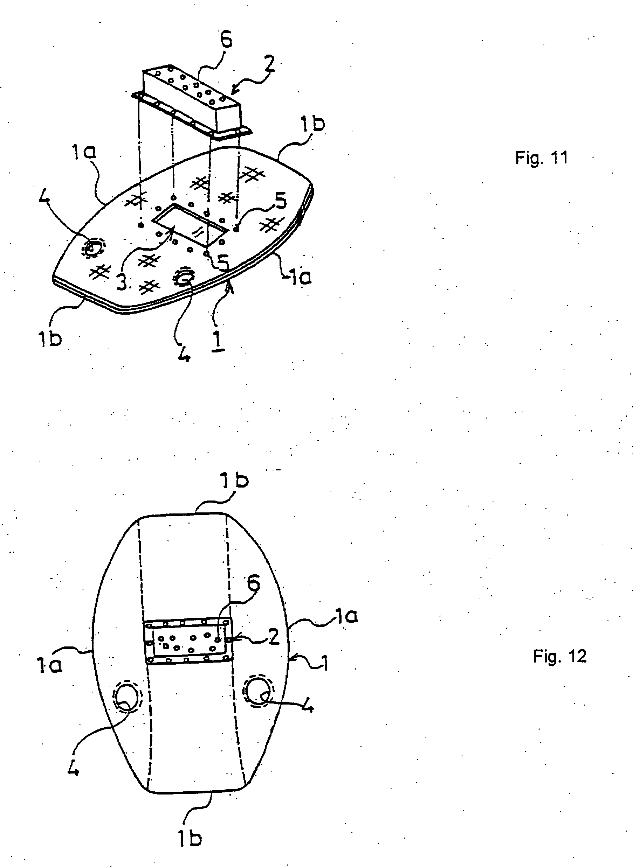

Hereinafter, the way of folding an airbag disclosed in the publication H04-100754 will be described with reference to Figs. 11 through 17.

Fig. 11 is a perspective view showing an airbag 1 spread in a plane and a sub container 2. The airbag 1 is an envelop-like object of which the shorter sides 1b are rectilinear and the right and left longer sides 1a are curved in arc-like shape. Formed in the center of a layer on a side opposite to the surface to be arranged to confront an occupant is gas inlet 3 for receiving gas from an inflator. Also formed in the layer are gas outlets (vent holes) 4 for buffering impact on the occupant when the occupant collides with the deployed (fully inflated) airbag. Numeral 5 designates rivet holes. The sub container 2 has a bottom face with holes 6 for passage of gas from the inflator.

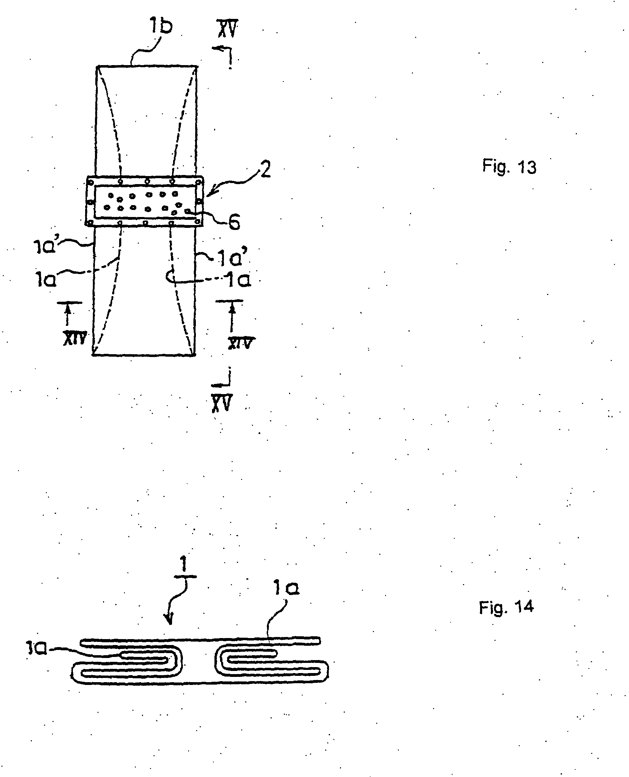

As shown in Fig. 12, the airbag 1 is spread in a plane in a state that the sub container 2 is connected to the airbag 1. Then, as shown in Fig. 13 and Fig. 14 (sectional view taken along a line XIV-XIV of Fig. 13), portions along the longer sides 1a are folded inside the airbag 1 to make the width of the airbag 1 slightly smaller than the width of the sub container 2, so as to form an interim folded body.

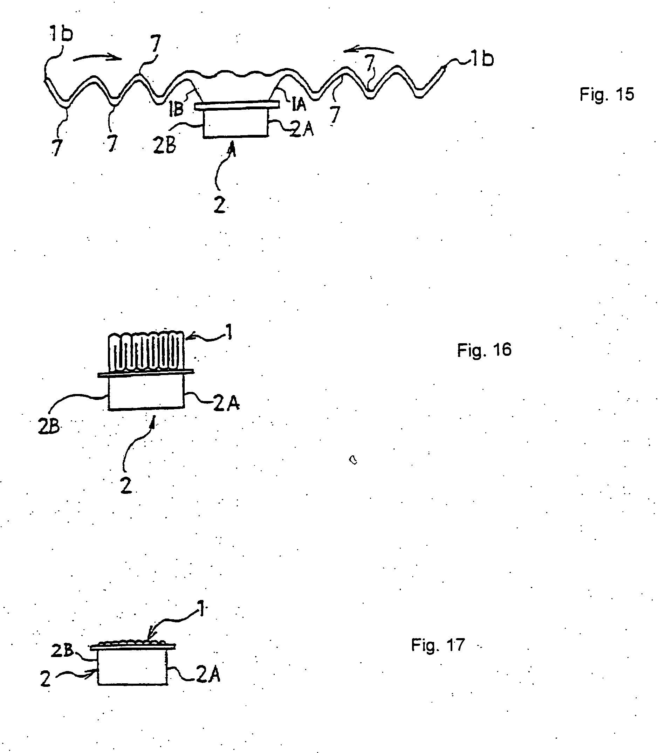

Next, as shown in Fig. 15 (side view taken from a line XV-XV of Fig. 13), the interim folded body is repeatedly folded into a bellow to make valley and mountain folds 7 in directions perpendicular to the rectilinear longer sides 1a' of the interim folded body. As shown in Fig. 16, repeatedly folded portions are piled on each other to form a lump body and the lump body is accommodated in the sub container 2 (Fig. 17).

In this publication H04-100754, the folded airbag is accommodated in the sub container 2 and the sub container 2 with the airbag is accommodated in a main container (not shown). However, the sub container may be omitted and in this case, the folded airbag is directly accommodated in a container.

In the conventional passenger-side airbag device, the airbag 1 is folded so as to form the lump body. The peripheral edge of the gas inlet 3 of the airbag 1 is connected to the sub container 2. Assuming the area of the airbag 1 about the periphery of the gas inlet 3 is composed of two area: a windshield-side area 1A connected to a windshield side 2A of the sub container 2 and an occupant-side area 1B connected to the occupant-side 2B of the sub container 2, the windshield-side area 1A and the occupant-side area 1B are equal in length.

Therefore, when the airbag 1 is inflated (deployed) by gas from the inflator, the airbag 1 is deployed such that a vehicle-front side portion i.e. the windshield side portion and a vehicle-rear side portion i.e. the occupant side portion of the airbag are substantially symmetrically inflated.

In US 5,538,281, a folded airbag is disclosed. The airbag is folded in such a manner that the front portion or upper end portion of the airbag is inflated earlier than a rear portion or bottom portion of the airbag.

### [Problems to be resolved by the Invention]

It was found from various studies that the smooth deployment of the airbag may be obtained by such a structure that the front portion (vehicle-front side portion) of the airbag is inflated earlier than the rear portion (vehicle-rear side portion) of the airbag, but of course, it depends on the layout of the cabin and the arrangement angle of the instrument panel of the vehicle and the arrangement of the airbag apparatus.

It is an object of the present invention to provide an airbag apparatus in which a front portion (vehicle-front side portion) of an airbag is inflated earlier than a rear portion (vehicle-rear side portion) of the airbag.

### [Means to Solve the Problems]

According to the present invention, this object is achieved by an airbag device as defined in claim 1 and a method for folding an airbag as defined in claim 3. The dependent claims define an advantageous and preferred embodiment of the present invention.

An airbag apparatus of the present invention comprises a folded airbag and a gas generator for inflating the airbag, wherein the airbag is designed to be deployed in front of an occupant, where the airbag is folded such that a front portion thereof in the longitudinal direction of a vehicle is inflated earlier than a rear portion thereof. According to the present invention, the rear portion of the airbag is first folded, then left and right portions are then folded, and after that, the front portion is folded, thereby ensuring that the front portion is inflated earlier than the rear portion in a process of deployment of the airbag.

### [Brief Explanation of the drawings]

Figs. 1(a), 1(b) are illustrations for explaining a process of folding an airbag of an airbag apparatus according to an embodiment.
Figs. 2(a), 2(b) are illustrations for explaining the process of folding the airbag of the airbag apparatus according to the embodiment.
Figs. 3(a), 3(b) are illustrations for explaining the process of folding the airbag of the airbag apparatus according to the embodiment.
Figs. 4(a), 4(b) are illustrations for explaining the process of folding the airbag of the airbag apparatus according to the embodiment.
Fig. 5 is an illustration for explaining the process of folding the airbag of the airbag apparatus according to the embodiment.
Fig. 6 is an illustration for explaining the process of folding the airbag of the airbag apparatus according to the embodiment.
Fig. 7 is an illustration for explaining the process of folding the airbag of the airbag apparatus according to the embodiment.
Fig. 8 is an illustration for explaining the process of folding the airbag of the airbag apparatus according to the embodiment.
Fig. 9 is an illustration for explaining the process of folding the airbag of the airbag apparatus according to the embodiment.
Figs. 10(a)-10(c) are illustration for explaining the inflating actions of the airbag apparatus according to the embodiment.
Fig. 11 is a perspective view of a conventional example.
Fig. 12 is a plane view of the conventional example.
Fig. 13 is an illustration for explaining the process of folding an airbag of the conventional example.
Fig. 14 is a sectional view taken along a line XIV-XIV of Fig. 13.
Fig. 15 is an illustration for explaining the process of folding the airbag of the conventional example.
Fig. 16 is an illustration for explaining the process of folding the airbag of the conventional example.
Fig. 17 is an illustration for explaining the process of folding the airbag of the conventional example.

### [Embodiments for carrying out the Invention]

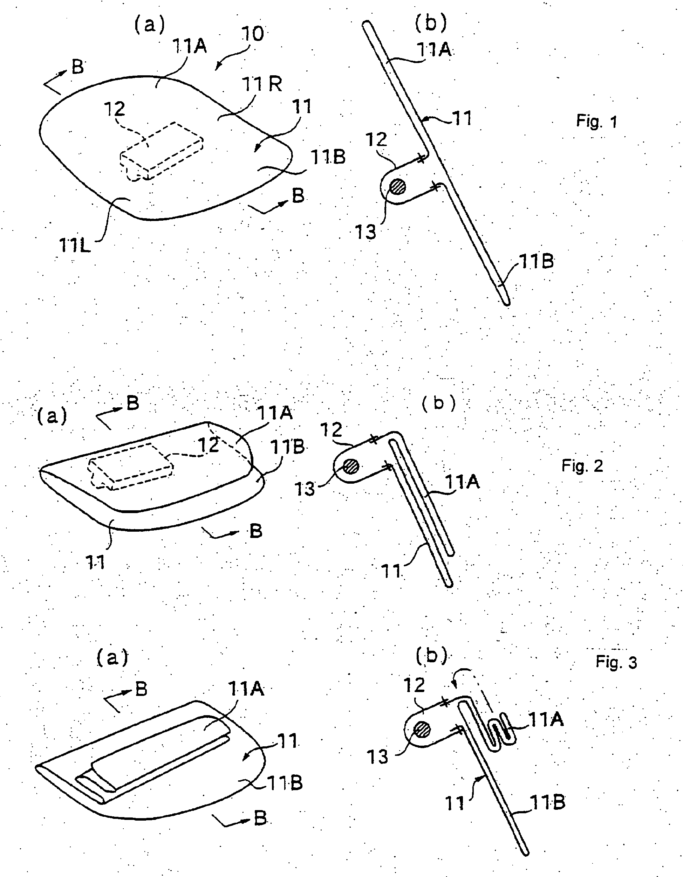

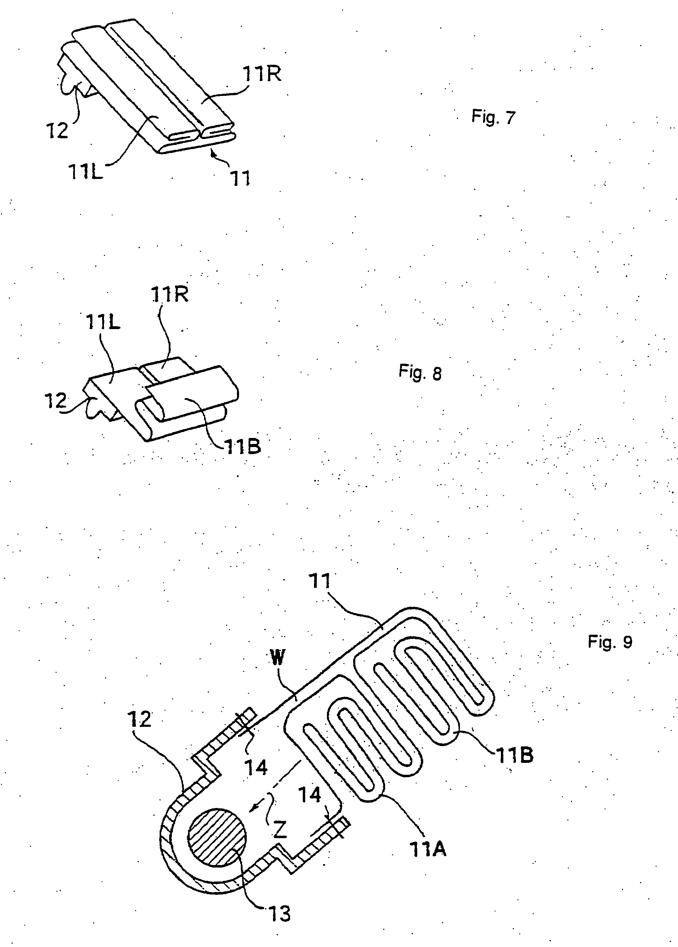

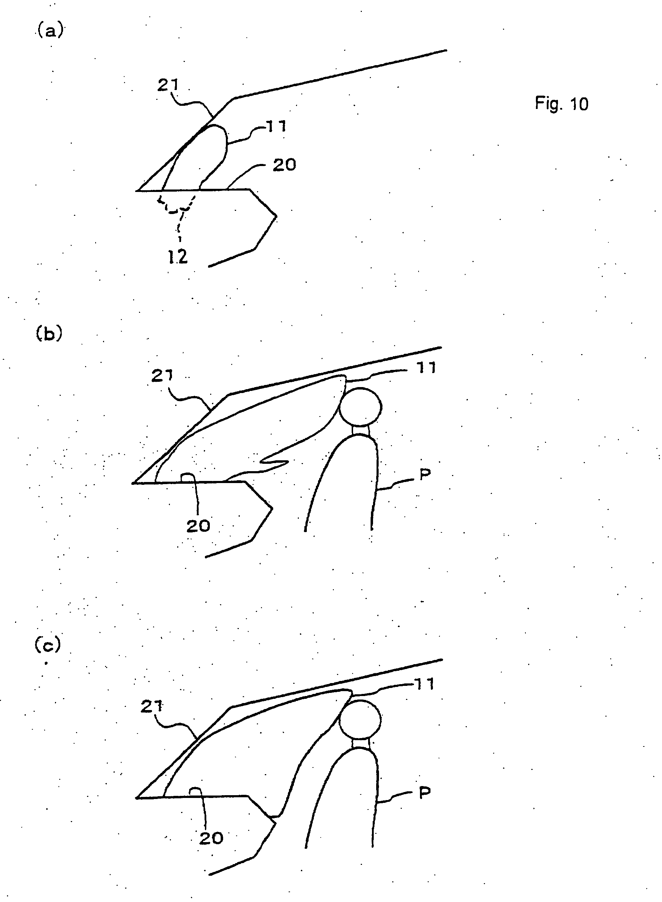

Hereinafter, an embodiment of the present invention will be described with reference to the attached drawings. Fig. 1(a) through Fig. 9 are illustrations for explaining a process of folding an airbag of a passenger-side airbag apparatus according to the embodiment. Figs. 1(a), 2(a), 3(a), 4(a) and Figs. 5-8 are perspective views, Figs. 1(b), 2(b), 3(b), 4(b) are sectional views taken along line B-B of Figs. 1(a), 2(a), 3(a), 4(a), respectively, and Fig. 9 is a sectional view showing a state that the folded airbag is about to be assembled into a container. Figs. 10(a)-10(c) are illustration for explaining profiles of the inflating airbag.

The passenger-side airbag apparatus 10 comprises an airbag 11, a container 12 accommodating the airbag 11, an inflator 13 which is attached to the container 12 for generating gas for inflating the airbag 11, and a lid (not shown) for covering an opening in the top of the container 12. As shown in Fig. 9, the airbag 11 is secured around its gas inlet to the container 12 by a fastening member 14.

For folding and accommodating the airbag 11 into the container 12, the airbag 11 is first spread in plain as shown in Figs. 1(a), 1(b) and is folded in such a manner that a rear portion 11A, to be arranged at the vehicle-rear side (at the instrument panel 20 side in Fig. 10), is superposed on the top of the container 12. After that, as shown in Figs. 3(a), 3(b), the rear portion 11A is folded zigzag into a block shape which is long and narrow in the left-to-right direction. The folds formed by this folding extend in the left-to-right direction of the airbag 11.

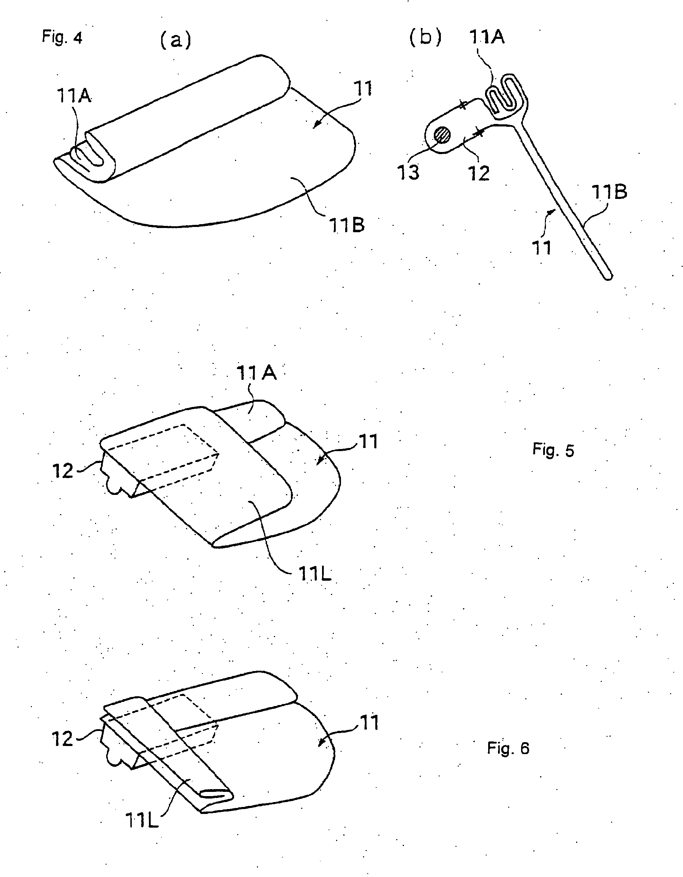

The rear portion 11A in the block shape is reversed according to an arrow in Fig. 3(b) and is sunk inside the airbag 11 as shown in Figs. 4(a), 4(b).

After that, as shown in Fig. 5, a left portion 11L of the airbag 11 is folded toward the right side in such a manner that the left portion 11L is superposed on the top of the container 12 and, as shown in Fig. 6, is further folded several times into a narrow width. The folds formed by this folding of the left portion 11L extend in the front-to-back direction.

Then, in a symmetrical manner as the left portion 11L, a right portion 11R of the airbag 11 is folded such that the right portion 11R is superposed on the top of the container 12 and is further folded several times into a narrow width as shown in Fig. 7. The folds formed by this folding of the right portion 11R extend in the front-to-back direction.

After that, as shown in Fig. 8, a front portion 11B of the airbag 11 is folded such that the front portion is superposed on the top of the container 12 and is further folded zigzag into a block shape. The folds formed by this folding of the front portion 11B extend in the left-to-right direction. The front portion 11B in the block shape is turned by 180° over the top of the container 12, whereby the folded portions of the airbag are entirely piled on the top of the container 12 (Fig. 9). Then, this piled portion is slid (parallel movement) into the container 12 (see the arrow Z in Fig. 9). The lid is put on the container 12, thereby assembling the airbag apparatus. As shown in Fig. 9, the front portion 11B folded zigzag is disposed above (on the outlet side of the container 12) the rear portion 11A which is also folded zigzag. Further, as shown in Fig. 9, a gas passage W for introducing gas from the inflator 13 into the front portion 11B and the rear portion 11A exists at the vehicle front side (windshield side) in the piled body of the airbag. The direction of the gas passage W is completely opposite to the direction of arrow Z to extend along the front side (windshield side) of the piled body in a state that the folded bodies 11A, 11B are pushed out from the container 12 but still piled on each other.

As shown in Fig. 10(a), the airbag apparatus is installed in an upper portion of the instrument panel 20 which behind a windshield 21 extends substantially horizontally or slightly downward toward the rear side of the vehicle. As the inflator 13 is actuated to spout out gas in the event of a vehicle collision, the lid is torn to open and the airbag 11 starts to inflate as shown in Figs. 10(a), 10(b), 10(c) in this order. In this case, the front portion 11B and the rear portion 11A are pushed out from the container 12 in the still piled state as shown in Fig. 9 by gas pressure from the inflator 13. The gas flows through the gas passage W in the direction opposite to the direction of arrow Z of Fig. 9 so as to flow preferentially into the front portion 11B to inflate the front portion 11B, whereby the airbag 11 first receives the head of an occupant P as shown in Fig. 10(b). Then, as shown in Fig. 10(c), the rear portion 11A of the airbag 11 is also inflated so as to receive the upper body of the occupant P. In this manner, the airbag apparatus has a behavioral characteristic of first receiving the head of the occupant P.

The aforementioned embodiment should be taken as an example of the present invention. The present invention can be adopted to another form not illustrated. For example, though the left portion 11L is folded before the right portion 11R is folded as shown in Figs. 5-7 in the aforementioned embodiment, the right portion 11R may be folded before the left portion 11L is folded, or the left portion 11L and the right portion 11R may be folded simultaneously if possible. The left portion 11L and the right portion 11R may be folded zigzag.

### [Effects of the Invention]

As described above, the present invention provides an airbag apparatus having such a behavioral characteristic that a front portion of an airbag is inflated earlier than a rear portion of the airbag.

## Claims

1. An airbag apparatus (10) to be installed in a vehicle, comprising a folded airbag (11) and a gas generator (13) for inflating the airbag (11), the airbag (11) being designed to be deployed in front of an occupant (P),
wherein the airbag (11) comprises, in the longitudinal direction of the vehicle, a front portion (11B) and a rear portion (11A), and
wherein the airbag (11) is folded such that the front portion (11B) is inflated earlier than the rear portion (11A),
**characterized in that**
the rear portion (11A) of the airbag (11) is first folded, then left and right portions (11L, 11R) of the airbag (11) are folded, and
after that the front portion (11B) is folded and disposed above the folded rear portion (11A).

2. The airbag apparatus (10) according to claim 1,
wherein the front portion (11B) is folded zigzag into a block shape.

3. A method for folding an airbag (11) to be installed in a vehicle, the airbag (11) being designed to be deployed in front of an occupant (P) in the vehicle,
wherein, in the longitudinal direction of the vehicle, the airbag (11) comprises a front portion (11B) and a rear portion (11A), and
wherein the airbag (11) is folded such that the front portion (11B) is inflated earlier than the rear portion (11A),
**characterized in that**
the rear portion (11A) of the airbag (11) is first folded, then left and right portions (11L, 11R) of the airbag (11) are folded, and after that the front portion (11B) is folded and disposed above the folded rear portion (11A).

4. The method according to claim 3,
wherein the front portion (11B) is folded zigzag into a block shape.

## Patentansprüche

1. Airbagvorrichtung (10) zum Einbau in einem Fahrzeug, umfassend einen gefalteten Airbag (11) und einen Gasgenerator (13) zum Aufblähen des Airbags (11), wobei der Airbag (11) dazu ausgestaltet ist, vor einem Insassen (P) entfaltet zu werden,
wobei der Airbag (11) in der Längsrichtung des Fahrzeugs, einen Vorderabschnitt (11B) und einen Hinterabschnitt (11A) umfasst, und
wobei der Airbag (11) derart gefaltet ist, dass der Vorderabschnitt (11B) früher als der Hinterabschnitt (11A) aufgebläht wird,
**dadurch gekennzeichnet, dass**
der Hinterabschnitt (11A) des Airbags (11) zuerst gefaltet ist, dann linke und rechte Abschnitte (11L, 11R) des Airbags (11) gefaltet sind, und
danach der Vorderabschnitt (11B) gefaltet und über dem gefalteten Hinterabschnitt (11A) angeordnet ist.

2. Airbagvorrichtung (10) nach Anspruch 1,
wobei der Vorderabschnitt (11B) zickzackartig in eine Blockform gefaltet ist.

3. Verfahren zum Falten eines Airbags (11) zum Einbau in einem Fahrzeug, wobei der Airbag (11) dazu ausgestaltet ist, vor einem Insassen (P) in dem Fahrzeug entfaltet zu werden,
wobei der Airbag (11) in der Längsrichtung des Fahrzeugs einen Vorderabschnitt (11B) und einen Hinterabschnitt (11A) umfasst, und
wobei der Airbag (11) derart gefaltet ist, dass der Vorderabschnitt (11B) früher als der Hinterabschnitt (11A) aufgebläht wird,
**dadurch gekennzeichnet, dass**
der Hinterabschnitt (11A) des Airbags (11) zuerst gefaltet wird, dann linke und rechte Abschnitte (11L, 11R) des Airbags (11) gefaltet werden, und danach der Vorderabschnitt (11B) gefaltet und über dem gefalteten Hinterabschnitt (11A) angeordnet wird.

4. Verfahren nach Anspruch 3,
wobei der Vorderabschnitt (11B) zickzackartig in eine Blockform gefaltet wird.

## Revendications

1. Dispositif à coussin gonflable de sécurité (10) à installer dans un véhicule, comprenant un coussin gonflable de sécurité plié (11) et un générateur à gaz (13) pour gonfler le coussin gonflable de sécurité (11), le coussin gonflable de sécurité (11) étant destiné pour se déployer en face d'un passager (P),
dans lequel le coussin gonflable de sécurité (11) comprend, dans la direction longitudinale du véhicule, une partie avant (11B) et une partie arrière (11A), et
dans lequel le coussin gonflable de sécurité (11) est plié tel que la partie avant (11B) est gonflée plus tôt que la partie arrière (11A),
**caractérisé en ce que**,
la partie arrière (11A) du coussin gonflable de sécurité est en première pliée, puis les partie gauche et droite (11L, 11 R) du coussin gonflable de sécurité (11) sont pliées, et
après cela, la partie avant (11B) soit pliée et déposée au dessus de la partie arrière pliée (11A).

2. Dispositif à coussin gonflable de sécurité (10) selon la revendication 1, dans lequel la partie avant (11B) est pliée en zigzag sous forme d'un bloc.

3. Procédé pour plier un coussin gonflable de sécurité (11) à installer dans un véhicule, le coussin gonflable de sécurité (11) étant destiné pour se déployer en face d'un passager (P) dans le véhicule,
dans lequel, dans la direction longitudinale du véhicule, le coussin gonflable de sécurité (11) comprend une partie avant (11B) et une partie arrière (11A), et
dans lequel le coussin gonflable de sécurité (11) est plié tel que la partie avant (11B) est gonflée plus tôt que la partie arrière (11A),
**caractérisé en ce que**
la partie arrière (11A) du coussin gonflable de sécurité (11) est en première pliée, puis les parties gauche et droite (11L, 11R) du coussin gonflable de sécurité (11) sont pliées, et après cela la partie avant (11B) est pliée et disposée au dessus de la partie arrière pliée (11A).

4. Procédé selon la revendication 3, dans lequel la partie avant (11B) est pliée en zigzag sous forme d'un bloc.
